# EUROPEAN PATENT SPECIFICATION

(11) **EP 1 858 726 B1**
(45) Date of publication and mention of the grant of the patent: **29.04.2009**
(21) Application number: 06727314.4
(22) Date of filing: 14.03.2006
(51) Int. Cl.: B60L 11/08

(54) **DRIVE UNIT AND VEHICLE INCLUDING THE SAME**
ANTRIEBSEINHEIT UND DIESE ENTHALTENDES FAHRZEUG
UNITE D'ENTRAINEMENT ET VEHICULE COMPRENANT LADITE UNITE

(30) Priority: 15.03.2005 JP 2005072960
(43) Date of publication of application: 28.11.2007
(73) Proprietor: TOYOTA JIDOSHA KABUSHIKI KAISHA, Toyota-shi, Aichi-ken, 471-8571 (JP)
(72) Inventor: UMEMURA, Atsushi, Toyota-shi, Aichi-ken 471-8571 (JP); MIZUTANI, Tatsuhiko, Toyota-shi, Aichi-ken 471-8571 (JP); YANAGIDA, Eiji, Toyota-shi, Aichi-ken 471-8571 (JP); TAKIZAWA, Keiji, Toyota-shi, Aichi-ken 471-8571 (JP)
(74) Representative: TBK-Patent
(86) International application number: PCT/IB2006/000562
(87) International publication number: WO 2006/097818

(56) References cited:
- EP-A- 0 755 818
- EP-A- 0 775 607
- EP-A- 0 882 887
- EP-A- 1 317 050
- US-A1- 2004 121 870

## Description

### BACKGROUND OF THE INVENTION

### 1. Field of the Invention

The invention relates generally to a drive unit and a vehicle including the same, and, more specifically, to a drive unit that includes multiple rotary electric devices that are used to output different amounts of power, and a vehicle including such drive unit.

### 2. Description of the Related Art

Japanese Patent Application Publication No. JP-A-2000-102108 describes a drive unit that includes an engine and two rotary electric devices. In this type of drive unit, one of the two rotary electric devices serves mainly as a generator, and the other rotary electric device serves mainly as an electric motor.

As described above, the multiple rotary electric devices are used for different purposes, and, thus have different features. Therefore, distinct stators and rotors that are suitable for the function of each rotary electric device must be selected. Accordingly, each rotary electric device requires components that differ from those of the other rotary electric devices, and a variety of components need to be prepared to assemble the multiple rotary electric devices. As a result, the variety of components increases, reducing the efficiency in the assembly and production of the rotary electric devices.

### SUMMARY OF THE INVENTION

A drive unit and a vehicle including such drive unit are configured according to the invention to reduce the variety of components constituting rotary electric devices (an electric motor and/or a generator) that output different amounts of power, and to improve efficiency in the assembly and production of the rotary electric devices.

A first aspect of the invention relates to a drive unit including multiple rotary electric devices that are used to output different amounts of power. Part of the configurations of at least two of the multiple rotary electric devices is made according to the same design specifications.

In the drive unit according to the first aspect, part of the configurations of at least two of the multiple rotary electric devices is made according to the same design specifications. As a result, the variety of the components constituting the multiple rotary electric devices can be reduced, and the efficiency in the assembly and production of the rotary electric devices can be improved.

In the drive unit according to the first aspect, each of the rotary electric devices may include a stator and a rotor both of which are formed by stacking multiple stator members and rotor members, respectively, having the same diameter. In addition, the multiple stator and rotor members may, respectively, be made of the same material and have the same structure. Because each of the multiple rotary electric devices can be assembled using shared stator members and rotor members, which are, respectively, made of the same material and have the same structure, the variety of components constituting the multiple rotary electric devices can be reduced. In addition, because the same members are produced in large numbers, the members can be produced with high accuracy.

In the drive unit according to the first aspect, although the rotary electric devices may share the stator members and the rotor members, that, respectively, have the same diameter, structure, and material composition, each rotary electric device differ in the number of the stator members and the number of the rotor members. Thus, the rotary electric devices output the different amounts of power. The rotary electric devices output different amounts of power due to the difference in the number of the stator members and the number of the rotor members included therein.

In the drive unit according to the first aspect, at least two of the rotary electric devices may be housed in a single-piece case. Because the multiple rotary electric devices are housed in the single-piece case, the structure of the case can be simplified in contrast to the housing of multiple rotary electric devices that do not share the same main configurations in the single-piece case.

A second aspect of the invention relates to a vehicle that includes the drive unit according to the first aspect, that is, the drive unit including the multiple rotary electric devices that output different amounts of power, wherein part of the configurations of at least two of the multiple rotary electric devices is made according to the same design specifications.

The vehicle according to the second aspect includes the drive unit according to the first aspect. Accordingly, the vehicle according to the second aspect produces the same effects as those produced by the drive unit according to the first aspect. For example, with the vehicle according to the second aspect, the variety of the components constituting the multiple rotary electric devices can be reduced, and the efficiency in the assembly and production of the rotary electric devices can be improved.

In the vehicle according to the second aspect, the rotary electric devices may include a first rotary electric device that is used to output power to a first axle and a second rotary electric device that is used to output power to a second axle.

The drive unit according to the first aspect may further include tri-axial power transfer means that is connected to three shafts, which are the input shaft that can receive and output power, the drive shaft that can output power, and the rotating shaft. The tri-axial power transfer means outputs power, based on the power input in and output from two of the three shafts, to the other shaft. The rotary electric devices include the first rotary electric device that inputs power in the rotating shaft and the second rotary electric device that inputs power in the drive shaft. In addition, the tri-axial power transfer means may be provided between the first rotary electric device and the second rotary electric device, and the tri-axial power transfer means, the first rotary electric device, and the second rotary electric device may be housed in a single-piece case. Thus, the drive unit can be made compact, and can be easily mounted, for example, in the vehicle. In addition, the second rotary electric device may be connected to the drive shaft via a reduction gear, and the reduction gear may be provided between the tri-axial power transfer means and the second rotary electric device. In this case, examples of the "reduction gear" include a reduction gear that can change the shift speed, and another reduction gear and a speed-up gear that do not change the shift speed.

A third aspect of the invention relates to a vehicle including an internal combustion engine, and the drive unit according to the first aspect further comprising the three-shaft power transfer means. According to this third aspect, the output shaft of the internal combustion engine is connected to the input shaft, and the axle is connected to the drive shaft. In addition, the drive unit includes multiple rotary electric devices that output different amounts of power, and part of the configurations of at least two of the multiple rotary electric devices is made according to the same design. The drive unit may further include the tri-axial power transfer means described above.

The vehicle according to the third aspect includes the drive unit according to the first aspect that includes the three-shaft power transfer means. Accordingly, the vehicle according to the third aspect produces the same effects as those produced by the drive unit according to the first aspect further including the three-shaft power transfer means. For example, with the vehicle according to the third aspect, the variety of the components constituting the multiple rotary electric devices can be reduced. This improves efficiency in the assembly and production of the rotary electric devices. Accordingly, the drive unit can also be made compact such that it can be easily mounted in the vehicle.

The vehicle according the third aspect may further include a third rotary electric device in which part of the configurations is made according to the same design specifications as those of the first and second rotary electric devices and which is used to output power to an axle different from the axle connected to the drive shaft. In addition, the rotary electric devices may be two of any of the first, second, and third rotary electric devices.

### BRIEF DESCRIPTION OF THE DRAWINGS

The features, advantages thereof, and technical and industrial significance of this invention will be better understood by reading the following detailed description of example embodiments of the invention, when considered in connection with the accompanying drawings, in which:
FIG. 1 schematically illustrates the configuration of a hybrid vehicle 20 including a drive unit according to an embodiment of the invention;
FIG. 2 illustrates an example of the configuration of the drive unit according to the embodiment;
FIG. 3 schematically illustrates the configuration of a stator member 92;
FIG 4 schematically illustrates the configuration of a rotor member 94;
FIG. 5 illustrates a graph showing an example of the output features of motors MG1 and MG2 according to the embodiment;
FIG 6 schematically illustrates the configuration of a hybrid vehicle 120 according to a modified example of the embodiment; and
FIG 7 schematically illustrates the configuration of a vehicle 220 according to another modified example of the embodiment.

### DETAILED DESCRIPTION OF THE EXAMPLE EMBODIMENTS

In the following description and the accompanying drawings, the present invention will be described in more detail in terms of example embodiments.

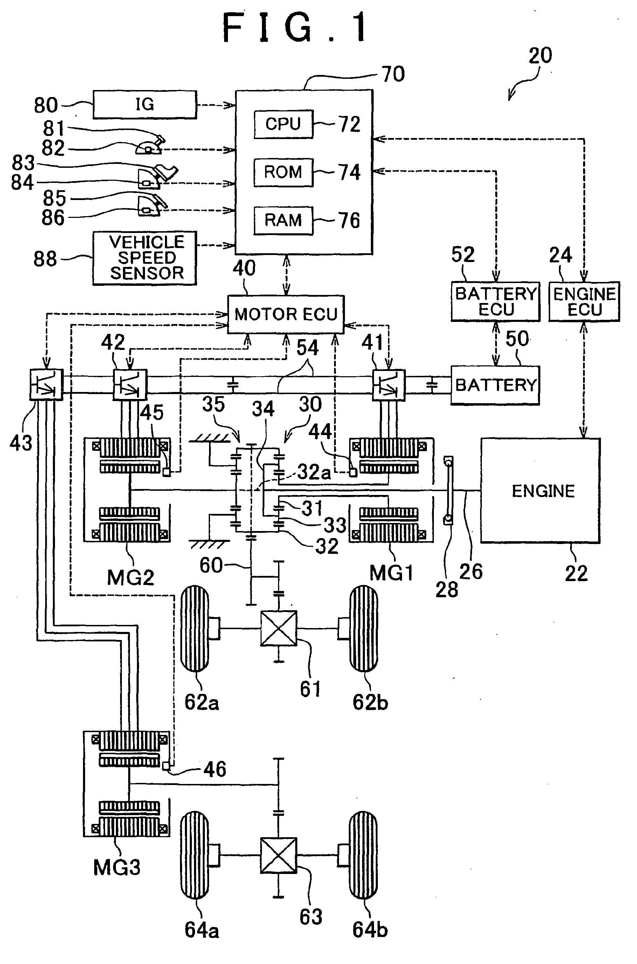

FIG 1 schematically illustrates the configuration of a hybrid vehicle 20 including a drive unit according to an embodiment of the invention. As shown in FIG 1, the hybrid vehicle 20 includes an engine 22; a planetary gear set 30; a motor MG1; a motor MG2; a motor MG3; and an electronic control unit 70 for a hybrid vehicle (hereinafter, simply referred to as a "hybrid ECU 70"). An electronic control unit 24 for an engine (hereinafter, simply referred to as an "engine ECU 24") performs the operation controls of the engine 22 such as fuel injection control, ignition control and intake air amount adjusting control. A carrier 34 of the planetary gear set 30, which rotates pinions 33, is connected to a crankshaft 26 serving as the output shaft of the engine 22 via a damper 28, and a ring gear 32 of the planetary gear set 30 is connected to the axle of front wheels 62a and 62b via a coupling gear 62 and a differential gear unit 61. The motor MG1 is connected to a sun gear 31 of the planetary gear set 30, and can generate electric power. The motor MG2 is connected to the ring gear 32 of the planetary gear set 30 via a reduction gear 35 formed of a planetary gear set. The motor MG3 is connected to the axle of rear wheels 64a and 64b via a differential gear unit 63. The hybrid ECU 70 controls the entirety of the hybrid vehicle 20

Each of the motors MG1, MG2 and MG3 is a known synchronous generator motor that can serve as a generator and that can also serve as an electric motor. The motors MG1, MG2 and MG3 are supplied with electric power from a battery 50 that is controlled by an electronic control unit 52 for a battery (hereinafter, simply referred to as a "battery ECU 52") via inverters 41, 42 and 43, respectively. An electronic control unit 40 for the motors (hereinafter, referred to as a "motor ECU 40") controls ON/OFF states of switching elements (not shown) of the inverters 41, 42 and 43, thereby controlling the motors MG1, MG2, and MG3, respectively. The motor ECU 40 receives signals necessary for controlling the motors MG1, MG2, and MG3, for example, signals from rotational position detection sensors 44, 45 and 46 that detect the rotational positions of the rotors of the MG1, MG2, and MG3, respectively, and signals indicating phase currents that are applied to the motors MG1, MG2, and MG3 and that are detected by a current sensor (not shown). The motor ECU 40 outputs switching control signals to the inverters 41, 42 and 43. The motor ECU 40 communicates with the hybrid ECU 70. The motor ECU 40 controls the motors MG1, MG2, and MG3 according to the control signals from the hybrid ECU 70, and transmits the data concerning the operating states of the motors MG1, MG2, and MG3 to the hybrid ECU 70 as required.

The hybrid ECU 70 is a microprocessor mainly including a CPU 72. In addition to the CPU 72, the hybrid ECU 70 includes ROM 74 that stores processing programs, RAM 76 that temporarily stores the data, an input port (not shown), an output port (not shown), and a communication port (not shown). The hybrid ECU 70 receives, via the input port, an ignition signal from an ignition switch 80; a signal indicating the shift position SP from a shift position sensor 82 that detects the position of a shift lever 81; a signal indicating the accelerator pedal operation amount Acc from an accelerator pedal position sensor 84 that detects the operation amount of the accelerator pedal 83; a signal indicating the brake pedal position BP from a brake pedal position sensor 86 that detects the operation amount of a brake pedal 85; a signal indicating the vehicle speed V from a vehicle speed sensor 88; and the like. As described above, the hybrid ECU 70 communicates with the engine ECU 24, the motor ECU 40 and the battery ECU 52, via the communication port. The hybrid ECU 70 exchanges various control signals and data with the engine ECU 24, the motor ECU 40 and the battery ECU 52.

In the hybrid vehicle 20 configured according to the embodiment, the required torque that should be output from the vehicle is calculated based on the accelerator pedal operation amount Acc corresponding to the operation amount of the accelerator pedal 83 achieved by the driver and the vehicle speed V, and the engine 22, the motors MG1, MG2 and MG3 are controlled such that the required power corresponding to the required torque is output therefrom. Examples of the operation control modes for the engine 22 and the motors MG1, MG2, and MG3 include the torque conversion operation mode, the charge-discharge operation mode, and the motor operation mode. In the torque conversion operation mode, the engine 22 is controlled such that the power corresponding to the required power is output from the engine 22, and the motors MG1, MG2, and MG3 are controlled such that the torque of the entire power output from the engine 22 is converted by the power split-integration mechanism 30, the motors MG1, and one of or both the motors MG2 and MG3 and then output therefrom. In the charge-discharge operation mode, the engine 22 is controlled such that the power corresponding to the sum of the required power and the electric power required for charging/discharging of the battery 50 is output from the engine 22, and the motors MG1, MG2, and MG3 are controlled such that the torque of the all or part of the power output from the engine 22 due to charging/discharging of the battery 50 is converted by one of or both the power split-integration mechanism 30 and the motors MG1, MG2, and MG3, and the required power is output therefrom. In the motor operation mode, the operation control is performed such that the engine 22 is stopped, and power corresponding to the required power is output from one of or both the motor MG2 and the motor MG3.

The drive unit according to the embodiment includes the two motors MG1 and MG2, the power split-integration mechanism 30, and the reduction gear 35. The input shaft of the drive unit according to the embodiment is the crankshaft 26 connecting the engine 22 to the drive unit via the damper 28, and the drive shaft serving as the output shaft of the drive unit is the rotating shaft of the ring gear 32. In FIG 1, the rotating shaft is shown as a ring gear shaft 32a indicated by the dashed line.

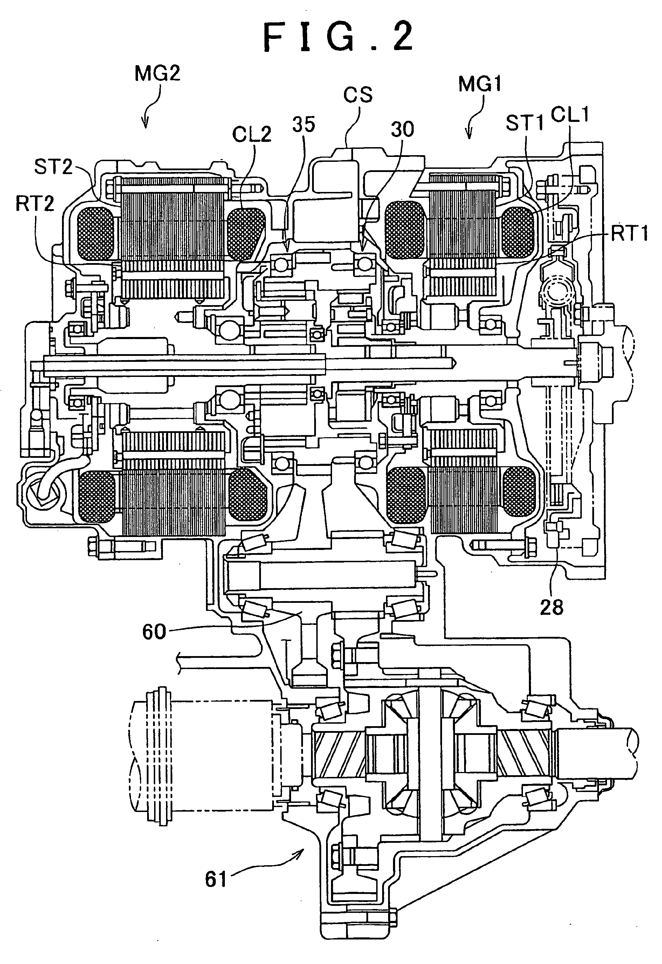

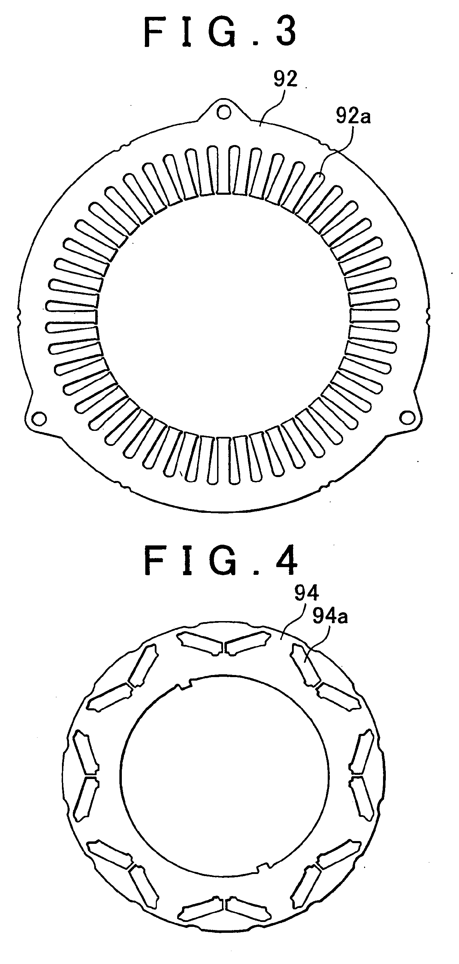

FIG. 2 illustrates an example of the configuration of the drive unit according to the embodiment. As shown in FIG. 2, in the drive unit according to the embodiment, the motor MG1, the power split-integration mechanism 30, the reduction gear 35, and the motor MG2 are coaxially arranged in a single-piece case CS in this order from the right side of the figure. The two motors MG1 and MG2 include stators ST1 and ST2, and the rotors RT1 and RT2, respectively. Each of the stators ST1 and ST2 is formed by stacking multiple stator members 92, shown in FIG 3, formed by punching out non-oriented magnetic steel sheets. Similarly, each of the rotors RT1 and RT2 is formed by stacking multiple rotor members 94, shown in FIG. 4, formed by punching out non-oriented magnetic steel sheets. Coils CL1 and CL2 are wound around the stator ST1 and ST2, respectively. Permanent magnets (not shown) are attached to the rotors RT1 and RT2. As shown in FIG 3, in the stator member 92, multiple lots 92a for winding the coils CL1 and CL2 are formed. As shown in FIG 4, in the rotor member 94, multiple magnet holes 94a into which permanent magnets are fitted are formed. Namely, the motors MG1 and MG2 are assembled from the stator members 92, which are made of the same material and which have the same structure, and the rotor members 94, which are made of the same material and which have the same structure.

In the embodiment, the motors MG1 and MG2 are assembled such that the number of the stator members 92 and the number of the rotor members 94 of the motor MG2 are 1.6 times as large as the number of the stator members 92 and the number of the rotor members 94 of the motor MG1, respectively. Namely, the motors MG1 and MG2 are assembled such that the thickness of the stator ST2 and the rotor RT2 obtained by stacking the stator members 92 and the rotor members 94 is 1.6 times as large as the thickness of stator ST1 and the rotor RT1 obtained by stacking the stator members 92 and the rotor members 94. This is because the output features are different between the motor MG1 and the motor MG2. In each of the above-mentioned operation modes, the motor MG1 serves mainly as a generator to adjust the speed of the engine 22 and output part of the power from the engine 22 to the front wheels 62a and 62b side. On the other hand, the motor MG2 serves mainly as an electric motor to output the power to the front wheels 62a and 62b side. Accordingly, the motor MG1 should have the output features suitable for a generator, and the motor MG2 should have the output features suitable for an electric motor.

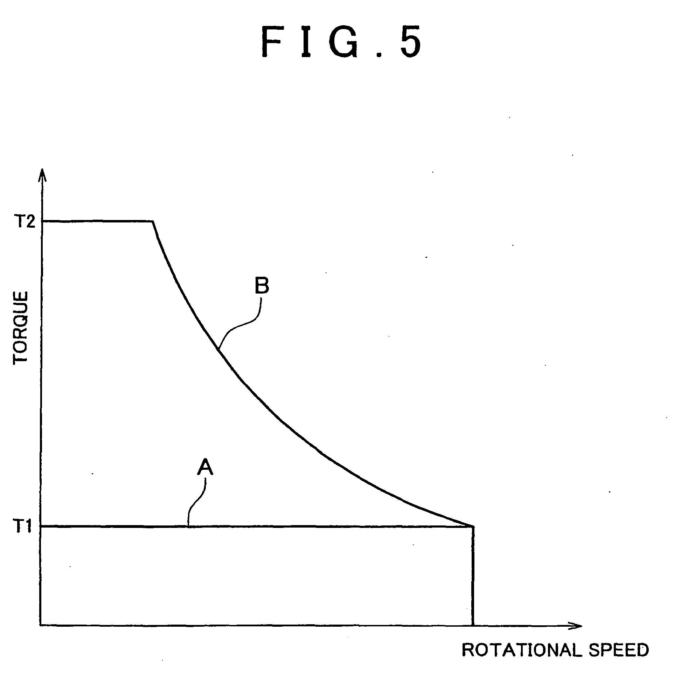

FIG. 5 shows an example of the output features of the motors MG1 and MG2 according to the embodiment. In FIG. 5, the range indicated by the straight line A corresponds to the output features of the motor MG1, and the range indicated by the line B, where a part is a straight line and the other part is a curved line, corresponds to the output features of the motor MG2. In the embodiment, as shown in FIG. 5, the maximum torque of the motor MG2 is approximately four times as high as the maximum torque of the motor MG1 in the region where the rotational speed is low. The torque of the motor is determined based on the product of the rotor magnetic flux and the electric current. Because the motors MG1 and MG2 are assembled from the rotors and the stators, that, respectively have the same diameter, the superficial area of the rotor of the motor MG2 needs to be 1.6 times as large as the superficial area of the rotor of the motor MG1 in order to have the motor MG2 output four times the toque of the motor MG1. Accordingly, the thickness of the stator ST2 and the rotor RT2 of the motor MG2 is made 1.6 times as thick as the stator ST1 and the rotor RT1 of the motor MG1. Thus, both the motor MG1 and the motor MG2, which have the different output features, can be assembled from the same stator members 92 and the same rotor members 94.

In the two motors MG1 and MG2 according to the embodiment, the stators ST1 and ST2 can be assembled from the same components (the stator members 92) and the rotors RT1 and RT2 can be assembled from the same components (the rotor members 94). In addition, in the two motors MG1 and MG2, the coils CL1 and CL2 are made of the same material and have the same cross sectional shape, permanent magnets are made of the same material, have the same cross sectional shape, and are provided with the same surface treatment. Making part of configurations, namely, the main configurations of the motors MG1 and MG2 according to the same design specifications reduces the variety of the components constituting the motors MG1 and MG2, and improves the efficiency in the assembly and production of the motors MG1 and MG2. Also, because the same members are produced in large numbers, the members can be produced with high accuracy, and quality of the motors MG1 and MG2 produced is more consistent. In addition, as shown in FIG 2, because the motors MG1 and MG2 having the same diameter are housed in the single-piece case CS with the power split-integration mechanism 30 and the reduction gear 35 provided therebetween, the drive unit can be made compact, and the drive unit can be mounted in the vehicle more easily.

In the drive unit included in the hybrid vehicle 20 according to the embodiment described above, part of configurations (the main configurations) of the motors MG1 and MG2 is made according to the same design specifications. Accordingly, the variety of the components constituting the motors MG1 and MG2 is reduced, and the efficiency in the assembly and production of the motors MG1 and MG2 is improved. Also, because the same members are produced in large numbers, the stator members 92 and the rotor members 94 can be produced with high accuracy, and quality of the motors MG1 and MG2 produced is more consistent. In addition, because the motors MG1 and MG2 are housed in the single-piece case CS with the power split-integration mechanism 30 and the reduction gear 35 provided therebetween, the drive unit can be made compact, and the drive unit can be mounted in the vehicle more easily.

In the drive unit according to the embodiment, the motor MG1 and the motor MG2 having different output features are assembled from the same stator members 92, which are made of the same material, which have the same configuration, and which have the same diameter, and the same rotor members 94, which are made of the same material, which have the same configuration, and which have the same diameter, the coils CL1 and CL2, which are made of the same material and which have the same cross sectional shape, and the permanent magnets which are provided with the same surface treatment. However, all of these components need not be the same in the motor MG1 and the motor MG2. For example, the configurations of the coils CL1 and CL2 and the permanent magnets may be made according to the particular specifications for each of the motor MG1 and the motor MG2. Alternatively, the stator members 92 and the rotor members 94 may be made of materials different between the motor MG1 and the motor MG2.

The drive unit according to the embodiment includes the two motors MG1 and MG2, the power split-integration mechanism 30, and the reduction gear 35, and the motors MG1 and MG2 are housed in the single-piece case CS with the power split-integration mechanism 30 and the reduction gear 35 provided therebetween. However, when the drive unit includes the two motors MG1 and MG2 and the power split-integration mechanism 30, the motors MG1 and MG2 may be housed in the single-piece case CS with the power split-integration mechanism 30 provided therebetween. Namely, the reduction gear 35 need not be provided. Alternatively, a speed-up gear or a reduction gear that changes the shift speed may be provided instead of the reduction gear 35.

In the hybrid vehicle 20 according to the embodiment, part of configurations of the motors MG1 and MG2 may be made according to the same design specifications. In addition, part of the configurations of the motor MG3 may be made according to the same design. specifications as those of the motors MG1 and MG2. Thus, the variety of components constituting the motors MG1, MG2, and MG3 can be reduced, and the efficiency in the assembly and production of the motors MG1, MG2 and MG3 can be improved. Part of the configurations of the motors MG1 and MG3 may be made according to the same design specifications, and the configurations of the motor MG2 may be made according to the design specifications different from those of the motors MG1 and MG3. Alternatively, part of the configurations of the motors MG2 and MG3 may be made according to the same design specifications, and the configurations of the motor MG1 may be made according to the design specifications different from those of the motors MG2 and MG3.

In the hybrid vehicle 20 according to the embodiment, in addition to the motors MG1 and MG2, the motor MG3 for driving the rear wheels 64a and 64b are provided. However, provision of the motor MG3 is optional.

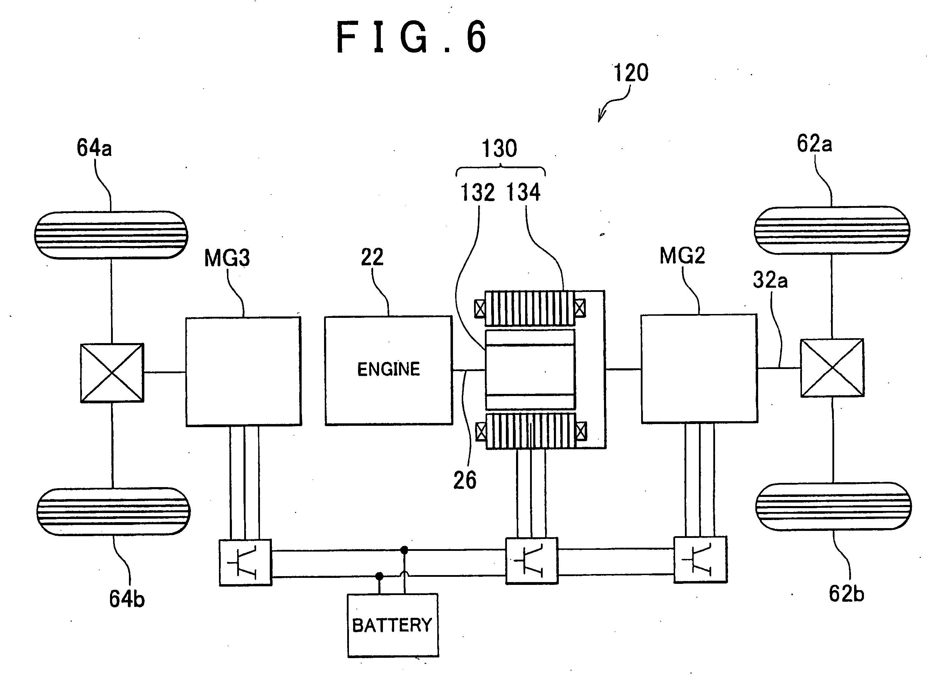

In the hybrid vehicle 20 according to the embodiment, the power from the engine 22 is output to the ring gear 32 (the ring gear shaft 32a serving as the drive shaft) connected to the front wheels 62a and 62b via the power split-integration mechanism 30. However, as shown in a hybrid vehicle 120 according to a modified example shown in FIG. 6, there may be provided an electric motor 130 for a rotor that includes an inner rotor 132 connected to the crankshaft 26 of the engine 22 and an outer rotor 134 connected to the drive shaft that outputs power to the front wheels 62a and 62b, and that transmits part of the power from the engine 22 to the drive shaft and converts the remaining power into electric power. In this case, the configurations of two or all of the motor MG2, the motor MG3, and the electric motor 130 for a rotor are made according to the same design specifications.

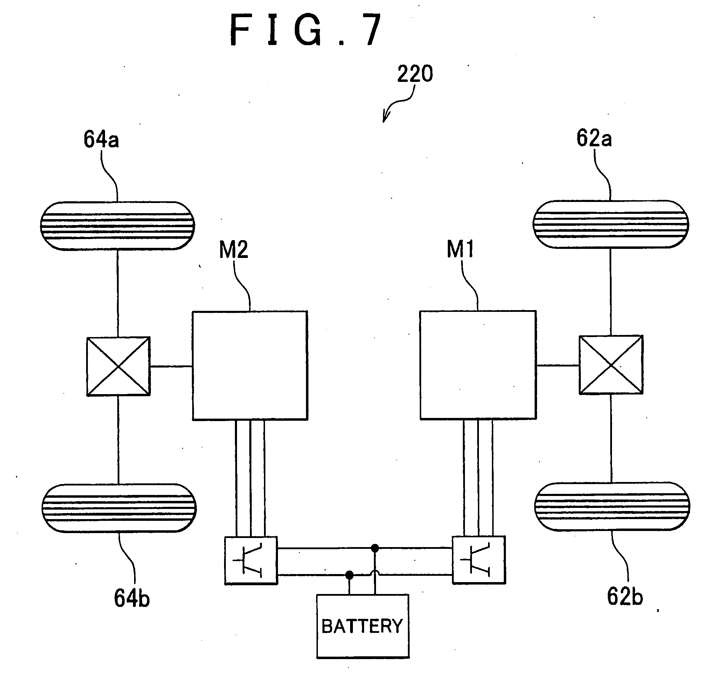

In the embodiment, the invention is applied to the hybrid vehicle 20 including the engine 22, and the motors MG1, MG2 and MG3 that are driven by the inverters 41, 42 and 43, respectively. However, application of the invention is not limited to hybrid vehicles. In another modified example of the invention, as shown FIG. 7, a vehicle 220 includes the motor M1 that outputs power to the front wheels 62a and 62b and the motor M2 that outputs power to the rear wheels 64a and 64b, but does not include an engine. In this case, part of configurations of the motor M1 and the motor M2 is made according to the same design specifications.

In the embodiment, the drive unit is mounted in the hybrid vehicle 20. However, the drive unit may be mounted in moving bodies other than vehicles, such as vessels and aircraft. Also, the drive unit may be embedded, for example, in immovable construction equipment.
Also, the invention can be applied to the industry for producing the drive units and vehicles.

## Claims

1. A drive unit including multiple rotary electric devices (MG1, MG2, MG3) that are used to output different amounts of power, wherein each of the rotary electric devices (MG1, MG2, MG3) comprises a stator which is formed by stacking multiple stator members (92) and a rotor which is formed by stacking multiple rotor members (94),
**characterized in that**
at least two of the multiple rotary electric devices (MG1, MG2, MG3) are constructed such that the stator and the rotor of each of the corresponding electric rotary devices comprises stator members (92) and rotor members (94) of identical shape and diameter, respectively, and
the stator members (92) and the rotor members (94) of the corresponding rotary electric devices (MG1, MG2) differ in the number of the stator members (92) stacked and the number of the rotor members (94) stacked, respectively, such that the rotary electric devices (MG1, MG2) output different amounts of power.

2. The drive unit according to claim 1,
**characterized in that**
the stator members (92) and the rotor members (94) of the corresponding rotary electric devices (MG1, MG2) are made of the same material and have the same structure, respectively.

3. The drive unit according to any one of claims 1 through 2,
**characterized in that**
at least two (MG1, MG2) of the corresponding rotary electric devices (MG1, MG2, MG3) are housed in a single-piece case (CS).

4. A vehicle including the drive unit according to any one of claims 1 through 3 that is used to output power to run the vehicle.

5. The vehicle according to claim 4,
**characterized in that**
the corresponding rotary electric devices (MG1, MG2) include the first rotary electric device (MG1) that is used to output power to a first axle (31) and the second rotary electric device (MG2) that is used to output power to a second axle (32) that differs from the first axle (31).

6. The drive unit according to any one of claims 1 through 2,
**characterized by** further comprising:
tri-axial power transfer means (30) that is connected to three shafts, which are an input shaft (26) that can receive and output power, a drive shaft (32) that can output power, and a rotating shaft (31), and that outputs power, based on power input in and output from two of the three shafts, to the other shaft, wherein
the corresponding rotary electric devices (MG1, MG2) include the first rotary electric device (MG1) that inputs power in the rotating shaft (31) and the second rotary electric device (MG2) that that inputs power in the drive shaft (32).

7. The drive unit according to claim 6,
**characterized in that**
the tri-axial power transfer means (30) is provided between the first rotary electric device (MG1) and the second rotary electric device (MG2), and the tri-axial power transfer means (30), the first rotary electric device (MG1), and the second rotary electric device (MG2) are housed in a single-piece case (CS).

8. The drive unit according to claim 7,
**characterized in that**
the second rotary electric device (MG2) is connected to the drive shaft (32) via a reduction gear (35), and
the reduction gear (35) is provided between the tri-axial power transfer means (30) and the second rotary electric device (MG2).

9. A vehicle including the drive unit according to any one of claims 6 through 8 and an internal combustion engine (22),
**characterized in that**
an output shaft (26) of the internal combustion engine (22) is connected to the input shaft (26), and
an axle is connected to the drive shaft (32).

10. The vehicle according to claim 9,
**characterized by** further comprising:
a third rotary electric device (MG3) comprising a stator which is formed by stacking multiple stator members (92) identical to the stator members of the first and second rotary electric devices (MG1, MG2) in view of shape, diameter, material and structure and a rotor which is formed by stacking multiple rotor members (94) identical to the rotor members of the first and second rotary electric devices (MG1, MG2) in view of shape, diameter, material and structure and which outputs power to an axle different from the axle connected to the drive shaft (32).

## Patentansprüche

1. Antriebseinheit mit mehreren elektrischen Drehvorrichtungen (MG1, MG2, MG3), die verwendet werden, um verschiedene Leistungsbeträge abzugeben, wobei jede der elektrischen Drehvorrichtungen (MG1, MG2, MG3) einen Stator, der durch Stapeln mehrerer Statorbauteile (92) ausgebildet ist, und einen Rotor aufweist, der durch Stapeln mehrerer Rotorbauteile (94) ausgebildet ist,
**dadurch gekennzeichnet, dass**
mindestens zwei der mehreren elektrischen Drehvorrichtungen (MG1, MG2, MG3) so ausgebildet sind, dass der Stator und der Rotor von jeder der entsprechenden elektrischen Drehvorrichtungen jeweils Statorbauteile (92) und Rotorbauteile (94) von identischer Form und Durchmesser aufweisen, und
sich die Statorbauteile (92) und die Rotorbauteile (94) der entsprechenden elektrischen Drehvorrichtungen (MG1, MG2) jeweils in der Anzahl der gestapelten Statorbauteile (92) und der Anzahl der gestapelten Rotorbauteile (94) unterscheiden, so dass die elektrischen Drehvorrichtungen (MG1, MG2) verschiedene Leistungsbeträge abgeben.

2. Antriebseinheit gemäß Anspruch 1,
**dadurch gekennzeichnet, dass**
die Statorbauteile (92) und die Rotorbauteile (94) der entsprechenden elektrischen Drehvorrichtungen (MG1, MG2) jeweils aus demselben Material gemacht sind und denselben Aufbau haben.

3. Antriebseinheit gemäß einem der Ansprüche 1 bis 2,
**dadurch gekennzeichnet, dass**
mindestens zwei (MG1, MG2) der entsprechenden Drehelektrovorrichtungen (MG1, MG2, MG3) in einem einstückigen Gehäuse (CS) untergebracht sind.

4. Fahrzeug mit der Antriebseinheit gemäß einem der Ansprüche 1 bis 3, die zur Leistungsabgabe verwendet wird, um das Fahrzeug anzutreiben.

5. Fahrzeug gemäß Anspruch 4,
**dadurch gekennzeichnet, dass**
die entsprechenden elektrischen Drehvorrichtungen (MG1, MG2) die erste elektrische Drehvorrichtung (MG1), die verwendet wird, um eine Leistung an eine erste Achse (31) abzugeben, und die zweite elektrische Drehvorrichtung (MG2) aufweist, die verwendet wird, um eine Leistung an eine zweite Achse (32) abzugeben, welche sich von der ersten Achse (31) unterscheidet.

6. Antriebseinheit gemäß einem der Ansprüche 1 bis 2, **gekennzeichnet durch** weiteres Aufweisen von:
einer dreiachsigen Kraftübertragungseinrichtung (30), die mit drei Wellen verbunden ist, welche eine Eingangswelle (26), die Kraft aufnehmen und abgeben kann, eine Antriebswelle (32), die Kraft abgeben kann, und eine Drehwelle (31) sind, die eine Kraft basierend auf einer Krafteingabe in und einer Ausgabe von zwei der drei Wellen an die andere Welle abgibt, wobei
die entsprechenden elektrischen Drehvorrichtungen (MG1, MG2) die erste elektrische Drehvorrichtung (MG1), die eine Kraft in die Drehwelle (31) eingibt, und die zweite elektrische Drehvorrichtung (MG2) aufweist, die eine Kraft in die Antriebswelle (32) eingibt.

7. Antriebseinheit gemäß Anspruch 6,
**dadurch gekennzeichnet, dass**
die dreiachsige Kraftübertragungseinrichtung (30) zwischen der ersten elektrischen Drehvorrichtung (MG1) und der zweiten elektrischen Drehvorrichtung (MG2) vorgesehen ist und die dreiachsige Kraftübertragungseinrichtung (30), die erste elektrische Drehvorrichtung (MG1) und die zweite elektrische Drehvorrichtung (MG2) in einem einstückigen Gehäuse (CS) untergebracht sind.

8. Antriebseinheit gemäß Anspruch 7,
**dadurch gekennzeichnet, dass**
die zweite elektrische Drehvorrichtung (MG2) durch ein Untersetzungsgetriebe (35) mit der Antriebswelle (32) verbunden ist, und
das Untersetzungsgetriebe (35) zwischen der dreiachsigen Kraftübertragungseinrichtung (30) und der zweiten elektrischen Drehvorrichtung (MG2) vorgesehen ist.

9. Fahrzeug mit der Antriebseinheit gemäß einem der Ansprüche 6 bis 8 und einer Brennkraftmaschine (22),
**dadurch gekennzeichnet, dass**
eine Ausgangswelle (26) der Brennkraftmaschine (22) mit der Eingangswelle (26) verbunden ist, und
eine Achse mit der Antriebswelle (32) verbunden ist.

10. Fahrzeug gemäß Anspruch 9,
**gekennzeichnet durch** weiteres Aufweisen von:
einer dritten elektrischen Drehvorrichtung (MG3), die einen Stator, welcher **durch** Stapeln mehrerer Statorbauteile (92) ausgebildet ist, die zu den Statorbauteilen der ersten und der zweiten elektrischen Drehvorrichtung (MG1, MG2) im Hinblick auf die Form, den Durchmesser, das Material und den Aufbau identisch sind, und einen Rotor aufweist, der **durch** Stapeln mehrerer Rotorbauteile (94) ausgebildet ist, die zu den Rotorbauteilen der ersten und der zweiten elektrischen Drehvorrichtung (MG1, MG2) im Hinblick auf die Form, den Durchmesser, das Material und den Aufbau identisch sind, aufgebaut ist, und die eine Leistung an eine Achse abgibt, die von der Achse verschieden ist, welche mit der Antriebswelle (32) verbunden ist.

## Revendications

1. Unité d'entraînement incluant plusieurs dispositifs électriques rotatifs (MG1, MG2, MG3) qui sont utilisés pour délivrer en sortie différentes quantités de puissance, où chacun des dispositifs électriques rotatifs (MG1, MG2, MG3) comprend un stator qui est formé en empilant plusieurs organes de stator (92) et un rotor qui est formé en empilant plusieurs organes de rotor (94),
**caractérisée en ce que**
au moins deux dispositifs parmi les dispositifs électriques rotatifs multiples (MG1, MG2, MG3) sont construits de telle sorte que le stator et le rotor de chacun des dispositifs électriques rotatifs correspondants comprenne des organes de stator (92) et des organes de rotor (94) ayant, respectivement, une forme et un diamètre identiques, et
les organes de stator (92) et les organes de rotor (94) des dispositifs électriques rotatifs correspondants (MG1, MG2) ont, respectivement, un nombre des organes de stator (92) empilés et un nombre des organes de rotor (94) empilés différents, de telle sorte que les dispositifs électriques rotatifs (MG1, MG2) délivrent en sortie différentes quantités de puissance.

2. Unité d'entraînement selon la revendication 1,
**caractérisée en ce que**
les organes de stator (92) et les organes de rotor (94) des dispositifs électriques rotatifs correspondants (MG1, MG2) sont faits du même matériau et ont la même structure, respectivement.

3. Unité d'entraînement selon l'une quelconque des revendications 1 à 2,
**caractérisée en ce que**
au moins deux dispositifs (MG1, MG2) parmi les dispositifs électriques rotatifs correspondants (MG1, MG2, MG3) sont logés dans un boîtier monobloc (CS).

4. Véhicule incluant l'unité d'entraînement selon l'une quelconque des revendications 1 à 3 qui est utilisée pour délivrer en sortie de la puissance pour mettre le véhicule en marche.

5. Véhicule selon la revendication 4,
**caractérisé en ce que**
les dispositifs électriques rotatifs correspondants (MG2, MG2) incluent le premier dispositif électrique rotatif (MG1) qui est utilisé pour délivrer en sortie de la puissance à un premier axe (31) et le deuxième dispositif électrique rotatif (MG2) qui est utilisé pour délivrer en sortie de la puissance à un deuxième axe (32) qui diffère du premier axe (31).

6. Unité d'entraînement selon l'une quelconque des revendications 1 à 2,
**caractérisée par** le fait de comprendre en plus:
un moyen de transfert de puissance triaxial (30) qui est relié à trois arbres, qui consistent en un arbre d'entrée (26) qui peut recevoir et délivrer en sortie de la puissance, un arbre d'entraînement (32) qui peut délivrer en sortie de la puissance, et un arbre rotatif (31), et qui délivre en sortie de la puissance, sur la base de la puissance introduite et délivrée en sortie à partir de deux arbres parmi les trois arbres, vers l'autre arbre, où
les dispositifs électriques rotatifs correspondants (MG1, MG2) incluent le premier dispositif électrique rotatif (MG1) qui introduit de la puissance dans l'arbre rotatif (31) et le deuxième dispositif électrique rotatif (MG2) qui introduit de la puissance dans l'arbre d'entraînement (32).

7. Unité d'entraînement selon la revendication 6,
**caractérisée en ce que**
le moyen de transfert de puissance triaxial (30) est pourvu entre le premier dispositif électrique rotatif (MG1) et le deuxième dispositif électrique rotatif (MG2), et le moyen de transfert de puissance triaxial (30), le premier dispositif électrique rotatif (MG1), et le deuxième dispositif électrique rotatif (MG2) sont logés dans un boîtier monobloc (CS).

8. Unité d'entraînement selon la revendication 7,
**caractérisée en ce que**
le deuxième dispositif électrique rotatif (MG2) est relié à l'arbre d'entraînement (32) par l'intermédiaire d'un engrenage de réduction (35), et
l'engrenage de réduction (35) est pourvu entre le moyen de transfert de puissance triaxial (30) et le deuxième dispositif électrique rotatif (MG2).

9. Véhicule incluant l'unité d'entraînement selon l'une quelconque des revendications 6 à 8 et un moteur à combustion interne (22),
**caractérisé en ce que**
un arbre de sortie (26) du moteur à combustion interne (22) est relié à l'arbre d'entrée (26), et
un axe est relié à l'arbre d'entraînement (32).

10. Véhicule selon la revendication 9,
**caractérisé par** le fait de comprendre en plus:
un troisième dispositif électrique rotatif (MG3) comprenant un stator qui est formé en empilant plusieurs organes de stator (92) identiques aux organes de stator du premier et du deuxième dispositif électrique rotatif (MG1, MG2) au niveau de la forme, du diamètre, du matériau et de la structure et un rotor qui est formé en empilant plusieurs organes de rotor (94) identiques aux organes de rotor du premier et du deuxième dispositif électrique rotatif (MG1, MG2) au niveau de la forme, du diamètre, du matériau et de la structure et qui délivre en sortie de la puissance vers un axe différent de l'axe relié à l'arbre d'entraînement (32).
